(19) Europäisches Patentamt

European Patent Office

Office européen des brevets

(11) EP 0 982 785 A1

(12) **EUROPEAN PATENT APPLICATION**
published in accordance with Art. 158(3) EPC

(43) Date of publication:
01.03.2000 Bulletin 2000/09

(51) Int. Cl.⁷: **H01M 2/16**, H01M 10/24

(21) Application number: 97918411.6

(22) Date of filing: 12.05.1997

(86) International application number:
PCT/JP97/01593

(87) International publication number:
WO 98/52239 (19.11.1998 Gazette 1998/46)

(84) Designated Contracting States:
DE FR

(71) Applicants:
• Japan ,represented by Director General of Agency of Industrial Science and Technology Chiyoda-ku, Tokyo 100 (JP)
• KANAI JUYO KOGYO CO., LTD. Itami-shi, Hyogo-ken 664 (JP)

(72) Inventors:
• SAKAI, Tetsuo, Osaka Nat. Res. Inst., AIST. Ikeda-shi, Osaka 563 Osaka 563 (JP)

• UEHARA, Itsuki, Osaka Nat. Res. Inst., AIST. Ikeda-shi, Osaka 563 (JP)
• NISHIDA, Masaaki Kyoto-shi, Kyoto 615 (JP)
• YAMASHITA, Hiroyuki Higashinada-ku, Kobe-shi Hyogo 658 (JP)
• TAMURA, Koichi Sanda-shi Hyogo 669-13 (JP)

(74) Representative:
Schwarzensteiner, Marie-Luise Grape & Schwarzensteiner Patentanwälte Sebastiansplatz 7 80331 München (DE)

(54) **SEPARATOR FOR BATTERY AND ALKALI SECONDARY BATTERY USING THE SAME**

(57) A separator for alkaline secondary batteries comprising a porous sheet comprising organic fiber 1, a binder resin 4, and ion-exchange fine powder 3, wherein the ion-exchange fine powder 4 is adhered to the porous sheet with the binder resin 3 that infiltrates and seals the fine voids 2 or slits provided on the surface of the organic fiber 1 of the porous sheet, and wherein the ion-exchange fine powders do not fall out, electrolyte retention is excellent, and ion-exchange performance can be exhibited for a long time; and an alkaline secondary battery using the above-mentioned separator. The surface of the olefin-based finer 1 is provided with fine voids 2 and slits on its surface. The fine voids 2 and slits are formed by etching the olefin-based fiber with an organic solvent. The binder resin 3 is adhered to the porous sheet in a manner in which the binder reins partially infiltrates the fine voids 2 or slits while projecting outwards. On the tip of the projecting part, the ion-exchange fine powder 4 is fixed. As the binder resin 3, styrene—ethylene— butylene—styrene (SEBS) thermoplastic copolymer is preferred.

FIG. 1

EP 0 982 785 A1

**Description**

Technical Field

The present invention relates to a separator for batteries and an alkaline secondary battery using the above-mentioned separator.

Background Art

Hitherto, an olefin-based fiber mainly has been mainly used for materials constituting a separator of alkaline secondary batteries such as nickel-cadmium batteries, nickel-hydrogen batteries, or the like, because such batteries require the chemical stability, e.g., alkali resistance or oxidation resistance at high temperature, electrolyte retention, gas permeation, or the like.

The separators using the olefin-based fiber are excellent in the chemical stability, but they are hydrophobic, poor in the affinity with electrolyte and poor in the electrolyte retention. Therefore, the electrolyte tends to dry out after the repetition of discharge and charge for a long time.

In order to solve the above-mentioned problems of the olefin-based fiber, non-woven fabric sheets that were subjected to various hydrophilic treatments have been suggested. The treatments include:

a. an after treatment with surfactant as a water-soluble moistening agent;
b. a treatment in which a monomer or a polymer of acrylic resin of acrylic acid, acrylic acid ester, or the like, is graft polymerized with ultraviolet rays or electron beams;
c. an oxidation treatment with oxygen gas or fluorine gas in an inert gas; and
d. a sulfonation treatment with fuming sulfuric acid, concentrated sulfuric acid, chlorosulfuric acid, sulfurous acid gas, or the like.

Furthermore, in order to improve the discharge property, etc. of alkaline secondary batteries, there is another suggestion that inorganic fine powder (magnesium silicate) having an adsorptivity for metal ions is adhered to the surface of a separator comprising an alkali resistant synthetic fiber with a binder so as to prevent the metal ions from falling out and entering the electrolyte and from shifting to the opposite polarity (Publication of Japanese Patent Application No. (Tokko Sho) 52-37574).

Furthermore, there is another suggestion of a separator in which a porous sheet comprising olefin-based resin fiber is provided with ionomer resin. Moreover, the ionomer resin is obtained by adding and melt mixing metal cation (especially, zinc ion) to ethylene-unsaturated carbonic acid copolymer or ethylene-methacrylic acid copolymer as a substrate (Publication of Japanese Patent Application No. (Tokkai Hei) 4-233158).

In the above-mentioned prior arts, a separator that was subjected to a hydrophilic treatment has the following problems. That is, in the above a and c, due to storing batteries for a long time or repeating charge and discharge, the surfactant or oxide (-COOH, -OH, etc.) easily falls out of the olefin-based fiber. As a result, the electrolyte in the separator is gradually exhausted, triggering the increase of inner resistance to thus reduce the discharge capacity.

In the separator of the above "b", since the acrylic resin is poor in heat resistance and oxidation resistance, the battery lifetime at high temperature is short. Furthermore, the use of ultraviolet rays or electron beams in the graft reaction causes the deterioration of the olefin-based fiber. Consequently, the risk of micro short-circuit occurs. Furthermore, the step of washing by-products (homopolymers) produced during the graft reaction is required, thereby increasing the manufacturing cost.

The separator of the above "d" is excellent in heat resistance, alkali resistance, and oxidation resistance. However, it is poor in the electrolyte retention. If the sulfonation rate is increased in order to improve the electrolyte retention, the olefin-based fiber is deteriorated due to the strong acidity of fuming sulfuric acid, or the like. Consequently, there is a risk of the micro short-circuits. Furthermore, the step of washing an unreacted sulfuric acid is required after the sulfonation treatment, thereby increasing the manufacturing cost.

Furthermore, in the separator to which inorganic fine powder is adhered with the binder, since the binder is an aqueous resin and the alkali resistant fiber is hydrophobic, the binding power between the binder and the alkaline resistant fiber is weak. Consequently, the inorganic fine powder easily falls out. Furthermore, if a large amount of binder is used, the surface of the inorganic fine powder is perfectly coated with the binder, so that the adsorptivity of the metal ion is not sufficiently exhibited. Furthermore, if an aqueous disperse resin (emulsion) is used, the emulsifier is dissolved in the electrolyte, affecting the performance of batteries.

Recently, in accordance with the improvement of the performance of products using alkaline secondary batteries (portable electronic equipment, for example, portable telephone, notebook-type personal computer, etc.), the improvement of the performance of batteries (long lifetime, high capacity, small size, etc.) has been further demanded.

However, the above-mentioned prior arts cannot actually realize the above-mentioned demands.

Disclosure of Invention

It is an object of the present invention to solve the above-mentioned conventional problems and to provide a separator for batteries having high electrolyte retention, ion-exchange capacity and strength; having good alkali resistance and oxidation resistance; capable of inhibiting the self- discharge; capable of realizing long lifetime of batteries; and being produced at low cost. It is also an object of the present invention to provide an alkaline secondary battery using the above-mentioned separator.

In order to achieve the above-mentioned objects, a separator of the present invention comprises a porous sheet comprising organic fiber, a binder resin, and ion-exchange fine powder, wherein the ion-exchange fine powder is adhered to at least a part of the surface of the organic fiber and a fiber entangled part with the binder resin that is soluble in an organic solvent and that infiltrates and seals fine voids or slits provided on the surface of the organic fiber of the porous sheet. According to such a structure, all of the organic fiber, the binder resin, the ion-exchange fine powder are excellent in alkali resistance and oxidation resistance. Furthermore, since each of the above-mentioned materials is firmly adhered with each other by the anchor effect, physical fall-out or chemical decomposition of the ion-exchange fine powder does not occur at all, and thereby the electrolyte retention or ion-exchange performance can be exhibited for a long time. Furthermore, only by controlling the amount of the ion-exchange resins to be adhered, the ion-exchange capacity can be enhanced radically and the electrolyte retention can be improved as compared with the conventional hydrophilic treatment, such as sulfonation treatment or graft polymerization treatment of acrylic acid. Furthermore, when the separator obtained in this way is used for an alkaline secondary battery, the capability of adsorbing harmful ions in the electrolyte is improved and self-discharge due to the shuttle effect can be inhibited. Furthermore, the electrolyte does not tend to be exhausted, so that a long lifetime of a battery can be realized.

Furthermore, the binder resin adhered as mentioned above exhibits the stiffening effect that enhances the binding force between fibers constituting the separator. Consequently, cut-off at the time of incorporating separators into batteries or short-circuit due to charge / discharge cycling for a long time can be prevented.

It is preferable in the above-mentioned separator for batteries of the present invention that a mixing weight ratio of the binder resin to the ion-exchange fine powder is in the range from 1 : 0.3 to 1 : 10. More preferably, the ratio of the binder resin to the ion-exchange fine powder is in the range from 1 : 0.5 to 1 : 6.

Furthermore, it is preferable in the above-mentioned separator for batteries of the present invention that the ion-exchange fine powder is adhered to the porous sheet so that the ion-exchange fine powder has functions of adsorbing and catching harmful ions in the electrolyte and of retaining an alkaline electrolyte. In other words, the surface of the ion-exchange fine powder is not perfectly coated with the binder resin, but coated with the binder resin with a part of the surface exposed, or coated in the shape like a spider's web by having fine porous portions, and thereby the ion-exchanging performance of the ion-exchange fine powders can be enhanced sufficiently. Herein, the harmful ions in the electrolyte include metal ions such as manganese ion, ferrous ion, aluminum ion, or the like, which deposit on the anode and deteriorate the battery performance, in addition to the ions such as ammonium ion, chlorine ion, nitrate ion, or the like.

Furthermore, it is preferable in the above-mentioned separator for batteries of the present invention that the binder resin is at least one resin selected from the group consisting of styrene-based thermoplastic copolymer having alkali resistance and oxidation resistance, an olefin-based polypropylene resin or polyethylene resin, and a halogenated polyolefin-based polytetrafluoroethylene resin. As the styrene- based thermoplastic copolymer, styrene—ethylene—butylene—styrene block copolymer (which will be abbreviated as SEBS hereinafter), styrene—ethylene—propylene—styrene block copolymer (which will be abbreviated as SEPS hereinafter), styrene— isoprene—styrene block copolymer (which will be abbreviated as SIS hereinafter), styrene—butadiene—styrene block copolymer (which will be abbreviated as SBS hereinafter), or the like, can be used.

Furthermore, it is particularly preferable that a part or all of the above-mentioned binder resin is styrene-based styrene—ethylene—butylene —styrene (SEBS) thermoplastic copolymer.

Furthermore, it is preferable in the above-mentioned separator for batteries of the present invention that the ion-exchange fine powder comprises at least one resin selected from the group consisting of styrene-based cation-exchange resin or acrylic cation-exchange resin, styrene- based anion-exchange resin, acrylic anion-exchange resin or phenolic anion-exchange resin, and styrene-based chelate resin or pyridine-based chelate resin. Furthermore, from the viewpoint of improving the electrolyte retention, it is preferable that an ion exchange group of the ion-exchange fine powder is at least one group selected from the group consisting of sulfuric acid group, sulfonated group, carboxylic acid group, and carboxylate group.

Furthermore, it is preferable in the above-mentioned separator for batteries of the present invention that the ion-exchange fine powder comprises at least one selected from the group consisting of metallic oxide having alkali resistance and exhibiting the ion-exchange property in the alkaline electrolyte, hydroxide and inorganic salts thereof.

Furthermore, it is preferable in the above-mentioned separator for batteries of the present invention that the ion-exchange fine powder comprises at least one selected from the group consisting of titanium oxide, aluminum oxide, antimony oxide, potassium titanate and zirconium oxide.

Furthermore, it is preferable in the above-mentioned separator for batteries of the present invention that the ion-exchange fine powder has a granular shape provided with fine voids on the surface, flake shape, whisker shape, or scale shape. Such an ion-exchange fine powder can be obtained by at least one method selected from the group consisting of a freeze crushing method, a machine crushing method, and an atomization method. The freeze crushing method is more preferred. Furthermore, it is preferable that the average particle size of the ion-exchange fine powder is 100 μm pass. More preferably, it is 50 μm pass.

Furthermore, it is preferable in the above-mentioned separator for batteries of the present invention that the organic fiber is a polymer fiber having an alkali resistance and oxidation resistance. Furthermore, it is preferable in the above-mentioned separator for batteries of the present invention that a part of or the entire organic fiber is an olefin-based fiber.

Furthermore, it is preferable that the separator for batteries is a separator for alkaline secondary batteries.

Next, the separator for batteries of the present invention is an alkaline secondary battery using the above-mentioned separator. With such a structure, a separator for batteries having high electrolyte retention, ion-exchange capacity and strength; having good alkali resistance and oxidation resistance; capable of inhibiting the self- discharge; capable of realizing long lifetime of batteries; and being produced at low cost can be provided.

As mentioned above, according to the present invention, the surface part (the surface part ranging from the surface of the fiber to the inside of the fiber) of the olefin-based fiber is made to be porous by etching with an organic solvent, and then a binder resin that is soluble in an organic solvent having alkali resistance and oxidation resistance is firmly adhered thereto by an anchor effect. The firmly adhered binder resin adsorbs and catches harmful ions in the electrolyte, and at the same time, it holds the ion-exchange fine powder having a function of retaining the alkaline electrolyte by the anchor effect in a manner in which the ion-exchange fine powder is firmly adhered to the binder. Such an ion-exchange fine powder does not physically fall out during the step of manufacturing separators or the step of incorporating separators into batteries. Therefore, the ion-exchange fine powder is excellent in the electrolyte retention and can exhibit the ion-exchange performance for a long time. Furthermore, the adhered binder resin exhibits the stiffening effect. That is, the binder resin enhances the binding power between fibers constituting the substrate of the separator, and improves the strength of the separator itself. Consequently, cut-off at the time of incorporating the separators into batteries, or short-circuit due to the long period of charge / discharge cycling can be prevented.

Brief Description of Drawings

FIG. 1 is a schematic enlarged view showing a separator for batteries of one example of the present invention.

FIG. 2 is a schematic enlarged view showing a separator for batteries of another example of the present invention.

FIG. 3 is a graph showing a relationship between the mixing weight ratio of a binder resin to ion-exchange fine powder and the ion-exchange capacity of one embodiment of the present invention.

FIG. 4 is a graph showing a relationship between the mixing weight ratio of a binder resin to ion-exchange fine powder and the electrolyte retention of one embodiment of the present invention.

FIG. 5 is a graph showing a comparison of the electrolyte retention when voltage is applied to separators of Examples and Comparative Examples of the present invention and prior art.

FIG. 6 is a graph showing a comparison of the ion-exchange capacity of Examples and Comparative Examples of the present invention and prior art.

FIG. 7 is a graph showing a comparison of the coefficient of utilization at high rate discharge in the closed nickel hydrogen battery using the separators of Examples and Comparative Examples of the present invention and prior art.

FIG. 8 is a graph showing a comparison of the capacity retention when a closed nickel hydrogen battery using the separators of Examples and Comparative Examples of the present invention and prior art are stored for 2 weeks at 45 °C after charged.

FIG. 9 is a graph showing a comparison of the cycle change of the battery capacity in a closed nickel hydrogen battery using the separators of Examples and Comparative Examples of the present invention and prior art.

Best Mode for Carrying out the Invention

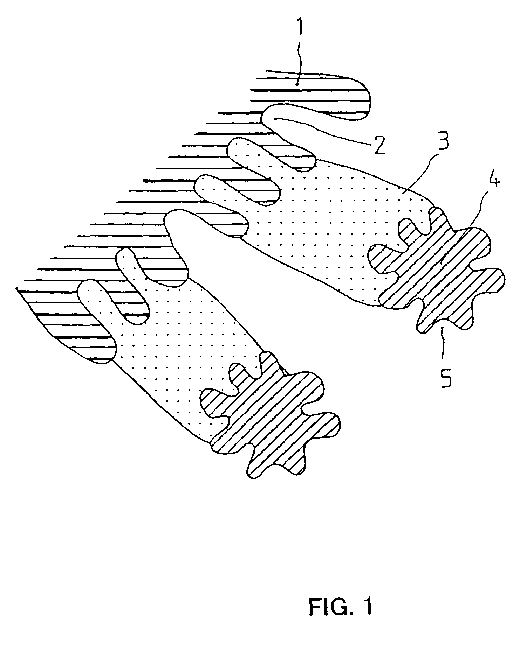

Hereinafter, the present invention will be explained with reference to the drawings. FIG. 1 is a schematic enlarged view showing a separator for batteries of one embodiment of the present invention. In FIG. 1, numeral 1 is an olefin-based fiber as a substrate. The above-mentioned olefin-based fiber 1 is provided with fine voids 2 or slits on its surface. The above-mentioned fine voids 2 or slits are formed by etching the above-mentioned olefin-based fiber with an organic solvent. A binder resin 3 is adhered to the olefin-based fiber 1 substrate in a manner in which it infiltrates the fine voids 2 or the slits and projects outward. At the tip of the projected portion, an ion-exchange fine powder 4 is fixed. Furthermore, a part of the ion-exchange fine powder 4 has an exposed part 5.

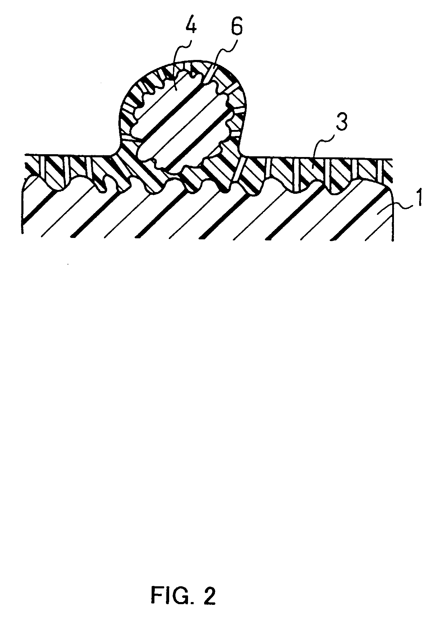

FIG. 2 is a schematic enlarged view showing a separator for batteries of another embodiment of the present invention. An olefin-based fiber 1 as a substrate is provided with fine voids 2 or slits formed by etching with an organic solvent. A binder resin 3 is attached to the surface of the olefin-based fiber 1 in a manner in which it partially infiltrates the fine voids 2 or the slits. Also, the binder resin 3 having a large number of micropores 6 on its surface attaches an ion-exchange powder 4 to its surface.

In the present invention: a binder resin having an alkali resistance and oxidation resistance and being soluble in an organic solvent infiltrates and seals a large number of fine voids or slits provided on the surface of the organic fiber that constitutes the porous sheet; and the ion-exchange fine powder is adhered to at least a part of the surface of the organic fiber and the fiber entangled part with the above-mentioned binder resin that infiltrate and seals the voids or slits. Moreover, a part of the surfaces of a large part of the ion-exchange fine powder is exposed.

The mixing weight ratio of the above-mentioned binder resin to the ion-exchange fine powder is in the range from 1 : 0.3 to 1 : 10, preferably in the range from 1 : 0.5 to 1 : 6. If the mixing weight ratio is less than 1 : 0.3, the surface of the ion-exchange fine powder is perfectly coated with the binder resins, and thus sufficient retention of the electrolyte and ion-exchange capacity cannot be obtained. On the other hand, if the above-mentioned mixing weight ratio is more than 1 : 10, the retention of the ion-exchange fine powder by the binder resin is insufficient, so that the ion-exchange fine powder physically falls out during the step of manufacturing separators or the step of incorporating separators into batteries.

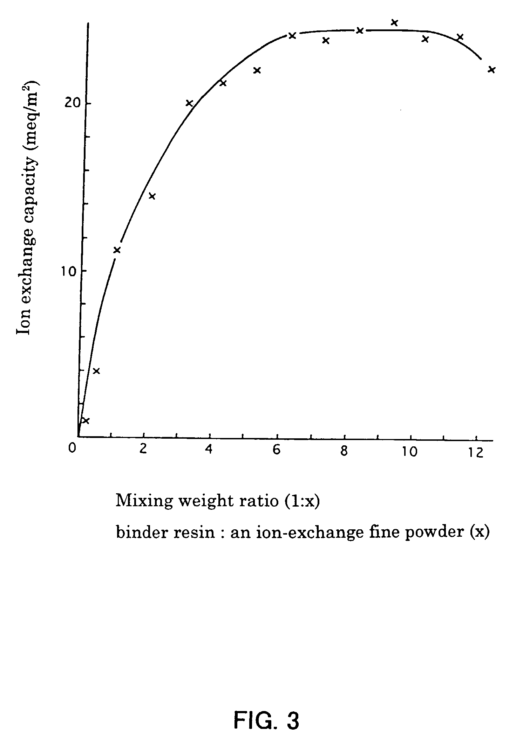

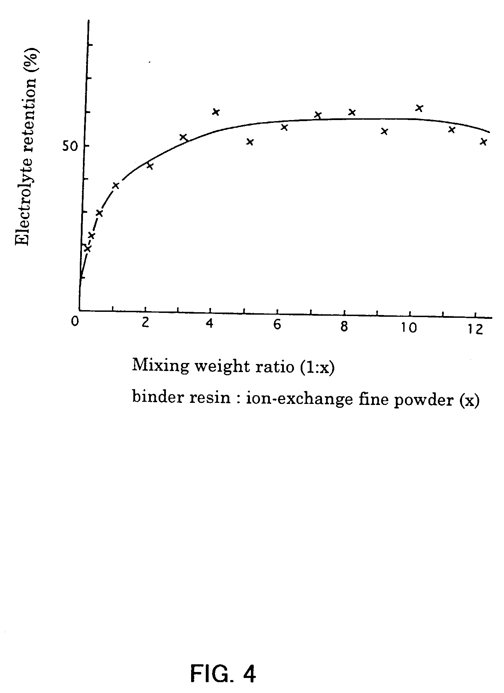

In order to confirm the above-mentioned points, a test sample was prepared by using a non-woven fabric comprising a polypropylene fiber and a solution (organic solvent: xylol) in which the mixing weight ratio of the binder resin (SEBS) to the ion-exchange fine powder (styrene sulfonic acid type strong acidity cation-exchange resin fine powder) is changed from 1 : 0.2 to 1: 1.2, and then the test sample was evaluated for the relationship between the mixing weight ratio and the ion-exchange capacity in accordance with the below mentioned testing method. The results are shown in FIG. 3. Moreover, when the relationship between the mixing weight ratio and the electrolyte retention was determined, the results of FIG. 4 were obtained. As is apparent from these results, it was confirmed that if the mixing weight ratio of the binder resin to the ion-exchange fine powder was less than 1 : 0.3, the ion exchange capacity and the electrolyte retention were insufficient. Also, it was confirmed that if the ratio was more than 1 : 10, the ion-exchange fine powders fell out and the ion-exchange capacity and the electrolyte retention were deteriorated.

As the binder resin that is soluble in an organic solvent, at least one resin selected from the group consisting of styrene-based thermoplastic copolymer that is excellent in alkali resistance and oxidation resistance, an olefin-based polypropylene resin or polyethylene resin, and a halogenated polyolefin-based polytetrafluoroethylene resin can be used. In particular, it is preferable that styrene—ethylene—butylene—styrene (SEBS) copolymer is used partially or entirely, in terms of the adhesiveness between the olefin-based fiber and the ion-exchange fine powder.

Examples of the ion-exchange fine powder include cation-exchange resin whose ion-exchange capacity when water is adsorbed is 0.5 to 4.5 eq/liter and which comprises styrene- based resin or acrylic resin as a base material; anion-exchange resin comprising styrene- based resin, acrylic resin or phenolic resin as a base material; a chelate resin comprising a styrene- based resin or pyridine-based resin as a base material; and zirconium-based, titanium-based, aluminum- based, or antimony-based metal oxide; hydroxide; or inorganic salt thereof, in which the ion-exchange capacity is 0.4 to 10.0 meq/g. In particular, titanium oxide, potassium titanate, antimony oxide, aluminum oxide, and zirconium oxide are suitable.

Preferable examples of the organic ion-exchange fine powder include strong acidity cation-exchange resin in which polystyrene resin that is three-dimensionally bridged by divinylbenzene is sulfonated, or a metal salt thereof, or weak acidity cation-exchange resin in which polyacrylic acid ester resin that is three-dimensionally bridged by divinylbenzene is hydrolyzed, or the metal salt thereof, or the appropriate combination thereof.

The above-mentioned ion-exchange fine powders have shapes, e.g. granular (including spherical microporous particles or fine particles), flake, whisker, or scale. The ion-exchange fine powder of the above-mentioned shape can be used singly or as a combination thereof. In particular, the ion-exchange fine powder provided with micropores (voids) on its surface is preferably used because it is adhered to the binder resin by the anchor effect, and the ion-exchange performance can be exhibited sufficiently in the alkaline electrolyte in accordance with the increase of the surface area.

Furthermore, if the average particle size of the above-mentioned ion-exchange fine powder is 100 $\mu$ pass, preferably 50 $\mu$ pass, the surface area of the resin is increased and the ion-exchange capacity of the resin can sufficiently be exhibited. Thus, the electrolyte retention can be improved and the membrane resistance (internal resistance) can be lowered.

Moreover, if the above-mentioned metal salt is machine crushed in a state of potassium salt or sodium salt, it can easily be formed into fine powder.

Furthermore, the ion-exchange resin powder can also be produced by drying spherical or fractured ion-exchange resin having a moisture content of 35 to 75% and particle size distribution of 0.3 to 1.2 mm so as to evaporate the moisture and then by freeze crushing thereof with liquid nitrogen.

Examples of the commercially available ion-exchange fine powders include: Sumichelate (trademark) manufactured by SUMITOMO CHEMICAL CO., LTD Dia-ion (trademark) manufactured by Mitsubishi Chemical Corp., Duolite (trademark) manufactured by Rohm & Haas Co., Ltd, Dowex (trademark) manufactured by DOW CHEMICAL LIMITED, or the like.

Furthermore, as the porous inorganic powder having an ion-exchange property, oxides of various kinds of metals such as zirconium, antimony, aluminum, or the like, hydroxides or metal salt thereof can be used. In particular, titanium oxide, potassium titanate, antimony oxide, aluminum oxide, zirconium oxide, or the like, can be used.

Moreover, in these solvent type binder resin and ion-exchange finer powder, styrene—ethylene—butylene—styrene thermoplastic copolymer and strong acidity cation-exchange resin or the combination with metal salt thereof are particularly preferred for a separator for alkaline secondary batteries.

The organic polymer used in the present invention includes polymer fiber having alkali resistance or oxidation resistance. It is preferable that the olefin-based fiber is used partially or entirely. As the olefin-based fiber, a dividable type fiber comprising polypropylene and polyethylene or polymethylpentene and polyethylene, olefin-based polyethylene, polypropylene and polymethylpentene fiber; a sheath and core type polyolefin fiber having a polypropylene as a core and polyethylene as a sheath, or porous polyethylene or polypropylene fiber can be used.

Next, one example of the methods for manufacturing a separator for alkaline batteries having the above-mentioned structure comprises the steps of dissolving a binder resin into an aromatic hydrocarbon solvent so as to swell an olefin-based fiber and to form a large number of voids or slits on its surface; impregnating a non-woven fabric sheet comprising olefin-based fiber with a slurry in which ion-exchange fine powders are dispersed, or scattering or applying the slurry to the non-woven fabric; and then evaporating the solvent by hot air drying.

Moreover, in the above-mentioned method, the slurry is attached by impregnation, scattering, or application. Consequently, the non-woven fabric sheet in which the ion-exchange fine powders are approximately uniformly dispersed can be formed. Also, there can be formed a density gradient type non-woven fabric sheet having a higher density part in which the ion-exchange fine powders of a relatively small particle size are dispersed toward the surface and a lower density part in which the ion-exchange fine powders of a relatively large particle size are dispersed toward the inside; or another density gradient type non-woven fabric sheet having a lower density part in which the ion-exchange fine powders of a relatively large particle size are dispersed toward the surface and a higher density part in which the ion-exchange fine powder of a relatively small particle size are dispersed toward the inside. In the case of the density gradient type, when a separator is incorporated into a battery, a negative pole is located at the high density side and a positive pole is located at the low density side, so that gas permeation further can be improved.

As the organic solvent used for the above-mentioned production method, at least one selected from xylene, toluene, methylcyclohexane, tetrahydronaphthalene, and decahydronaphthalene is suitable.

When an aromatic hydrocarbon solvent having a high evaporation rate, for example, benzene or cyclohexane is used, or when the heating temperature is too high, the solvent evaporates before voids or slits are provided on the surface of the fiber by the dissolution effect of the solvent. As a result, the adhesiveness between the olefin-based fiber and the binder resin is insufficient. Further, it is not preferable because the ion-exchange fine powders tend to fall out.

According to the present invention, the binder resin infiltrates and is firmly adhered to a large number of fine voids or slits, which are formed on the surface of the olefin-based fiber by a solvent that exhibits the dissolution effect when the temperature is raised. And ion-exchange fine powders are firmly adhered to a part of the surface of the porous sheet or a fiber entangled part with the binder resin having a kind of anchor effect. Moreover, a part of the surfaces of a large part of the ion-exchange fine powders is exposed.

Herein, "a part of the surfaces of a large part of the ion-exchange fine powders is exposed" does not mean the state in which the dispersed ion-exchange fine powders are perfectly coated with a binder resin. It means the state in which perfectly coated part of the powders or partially coated part of the powders are mixed, wherein more than half is occupied with the partially coated part.

Furthermore, partially coated part means the state in which an exposed part exists on a part of the surface of each ion-exchange fine powder. It is preferable that the exposed portion exists in the shape like a spider's web, in which a large number of micropores exist in at least one-third of the surface area of the ion-exchange fine powder.

Furthermore, the mixing weight ratio of the binder resin to the ion-exchange fine powder or the adhered amount is controlled, or cation-exchange fine powder and anion-exchange fine powder are used together as an ion-exchange fine powder. Consequently, the ion-exchange fine powder can be controlled freely in accordance with the battery performance in which electrolyte retention or ion-exchange fine powder, or the like, are required.

Hereafter, the present invention will be further specifically explained with reference to the following Examples.

Example 1

A non-woven fabric sheet having a basis weight of 30 g/m$^2$ and a thickness of 100 $\mu$m was prepared by sheeting a dividable type polyolefin fiber comprising polyethylene and polypropylene (DF-72 manufactured by DAIWABO CO., LTD, denier: 2d, denier after division: 0.2d) by a common sheet forming method, then water-jet treating thereof, and thermal calendar treating thereof.

Next, a separator "a" having an attached amount of 6 g/m$^2$, basis weight of 36 g/m$^2$ and a thickness of 100 $\mu$m was prepared by impregnating the above-mentioned non-woven fabric sheet with a slurry (solvent: xylol, concentration of the solid part: 10%) prepared under the below-mentioned mixing conditions, then drying by hot air for 5 minutes at 80 °C to evaporate the solvent, and calendar processing by a thermal roll (125 °C) so as to adjust the thickness.

| Mixing Conditions 1 | Mixing weight ratio |
| --- | --- |
| • SEBS resin (Kraton G-1652 produced by Shell Co., Ltd.) | 100 |
| • styrene sulfonic acid based strong acidity cation-exchange resin fine powder (Duolite C-20 produced by Rohm & Haas Co., Ltd) | 300 |
| • machine crushing 100 $\mu$m pass | |

Example 2

A separator "b" having an attached amount of 6 g/m$^2$, basis weight of 36 g/m$^2$ and a thickness of 100 $\mu$m was prepared by impregnating the non-woven fabric sheet of Example 1 with the slurry (solvent and concentration of the solid part were the same as Example 1) prepared under the below-mentioned Mixing Conditions 2 by the same method of Example 1.

| Mixing Conditions 2 | Mixing weight ratio |
| --- | --- |
| • SEBS resin (Kraton G-1652 produced by Shell Co., Ltd.) | 100 |
| • styrene sulfonic acid based strong acidity cation-exchange resin fine powder (Duolite C-20 produced by Rohm & Haas Co., Ltd) | 300 |
| • machine crushing 100 $\mu$m pass | |

Example 3

A separator "c" having an attached amount of 6 g/m$^2$, basis weight of 36 g/m$^2$ and a thickness of 100 $\mu$m was prepared by impregnating the non-woven fabric sheet of Example 1 with the slurry (solvent and concentration of the solid part were the same as Example 1) prepared under the below-mentioned Mixing Conditions 3 by the same method as Example 1.

| Mixing Conditions 3 | Mixing weight ratio |
| --- | --- |
| • SEBS resin (Kraton G-1652 produced by Shell Co., Ltd.) | 100 |
| • tetra potassium titanate (whisker) (TISMO produced by OTSUKA CHEMICAL CO., LTD) | 300 |
| • machine crushing 50 $\mu$m pass | |

In the structure of each separator of the above-mentioned Examples 1, 2, and 3, as shown in a schematic enlarged view of FIG. 1, an olefin- based fiber 1 is provided with a large number of voids 2 on its surface. A solvent type binder resin 3 infiltrates, seals and is firmly adhered to the voids 2. At the same time, the ion-exchange fine powder 4 is firmly adhered to at least a part of the surface of the fiber and a fiber entangled part with the solvent type binder resin 3. Moreover, the larger part of the surface of the ion-exchange fine powder 4 has an exposed portion 5.

Example 4

A non-woven fabric sheet having a basis weight of 50 g/m$^2$ and a thickness of 170 μm was prepared by forming a sheath and core type polyolefin-based fiber comprising polypropylene as a core and polyethylene as a sheath (NBF manufactured by DAIWABO CO., LTD, denier; 0.9d/1.5d, mixing ratio; 1 : 1) into a crossweb, sheeting the crossweb by a common card method, and then thermal calendar processing thereof.

Next, a separator for batteries "d" having an attached amount of 6 g/m$^2$, a basis weight of 56 g/m$^2$ and a thickness of 170 μm was prepared by an application process so that the slurry (solvent and concentration of the solid part were the same as Example 1) prepared under the below-mentioned mixing conditions 4 infiltrated the inside of the above-mentioned non-woven fabric sheet, followed by evaporating the solvent by a drying treatment using hot air for 5 minutes at 100 °C.

| Mixing Conditions 4 | Mixing weight ratio |
|---|---|
| • SEBS resin (Kraton G-1652 produced by Shell Co., Ltd.) | 100 |
| • Styrene sulfonic acid based strong acidity cation-exchange resin fine powder (Duolite C-20 produced by Rohm & Haas Co., Ltd,) | 100 |
| • freeze grinding 100 μm pass. | |

Example 5

A separator for batteries "e" having an attached amount of 6 g/m$^2$, a basis weight of 56 g/m$^2$ and a thickness of 170 μm was prepared by impregnating the same non-woven fabric sheet as Example 4 with the slurry (the solvent and concentration of solid part were the same as Example 1) prepared under the below mentioned Mixing Conditions 5.

| Mixing Conditions 5 | Mixing weight ratio |
|---|---|
| • SEBS resin (Kraton G-1652 produced by Shell Co., Ltd.) | 100 |
| • styreneaclyric acid based weak acidity cation-exchange resin fine powder (Duolite C-433 produced by Robin & Haas Co., Ltd.) | 100 |
| • freeze crushing 100 μm pass | |

Example 6

A separator for batteries "f" having an attached amount of 6 g/m$^2$, a basis weight of 56 g/m$^2$ and a thickness of 170 μm was prepared by impregnating the same non-woven fabric sheet as Example 4 with the slurry (the solvent and concentration of solid part were the same as Example 1) prepared under the below mentioned Mixing Conditions 6.

| Mixing Conditions 6 | Mixing weight ratio |
|---|---|
| • SEBS resin (Kraton G-1652 produced by Shell Co., Ltd.) | 100 |
| • styrene quaternary ammonium salt strong base anion-exchange resin fine powder (Duolite A-113 produced by Rohm & Haas Co., Ltd.) | 100 |
| • freeze crushing 100 μm pass | |

Example 7

A separator for batteries "g" having an attached amount of 6 g/m$^2$, a basis weight of 56 g/m$^2$ and a thickness of 170 μm was prepared by impregnating the same non-woven fabric sheet as Example 4 with the slurry (the solvent and concentration of solid part were the same as Example 1) prepared under the below mentioned Mixing Conditions 7.

| Mixing Conditions 7 | Mixing weight ratio |
|---|---|
| • SEBS resin (Kraton G-1652 produced by Shell Co., Ltd.) | 100 |
| • tetra potassium titanate (whisker) (TISMO produced by OTSUKA CHEMICAL CO., LTD) | 300 |
| • machine crushing 50 μm pass. | |

In the construction of each separator of the above-mentioned Examples 4, 5, 6, and 7, as shown in a schematic enlarged view of FIG. 2, an olefin-based fiber 1 as the substrate is provided with fine voids or slits on its surface, which had been formed by etching with an organic solvent. A binder resin 3 infiltrates and is adhered to the voids. At the same time, the ion-exchange fine powder 4 is firmly adhered to the solvent type binder resin 3. Moreover, a binder resin 3 is provided with a large number of micropores 6 so that the ion-exchange fine powder 4 is able to directly contact with outside liquid.

Comparative Example 1

A separator "h" having an attached amount of 6 g/m$^2$, a basis weight of 36 g/m$^2$ and a thickness of 100 μm was prepared by using a slurry (solvent: water, concentration of the solid part: 10%) prepared under the below-mentioned Mixing Conditions 8.

| Mixing Conditions 3 | Mixing weight ratio |
|---|---|
| • PP emulsion (Chemipearl WP100 manufactured by MITSUI OIL & GAS CO., LTD., active component: 40%) | 100 |
| • styrene sulfonic acid based strong acidity cation-exchange resin fine powder (Duolite C-20 produced by Rohm & Haas Co., Ltd.) | 300 |
| • machine crushing 100 μm pass | |

Comparative Example 2

A separator "i" having an attached amount of 6 g/m$^2$, a basis weight of 56 g/m$^2$ and a thickness of 170 μm was prepared by using the non-woven fabric sheet of Example 1 and a slurry comprising SEBS resin and ion-exchange fine powder in the weight ratio of 100 : 20.

Comparative Example 3

A separator "j" having an adhered amount of 6 g/m$^2$, a basis weight of 36 g/m$^2$ and a thickness of 100 μm was produced by using the non-woven fabric sheet of Example 4 and a slurry comprising SEBS resin and the ion-exchange fine powder in the weight ratio of 100 : 1200.

Prior Art 1

Separators "k" and "l" were prepared by sulfonating a non-woven fabric sheet having a basis weight of 30 g/m$^2$ and a thickness of 100 μm produced by the same method of Example 1 and a non-woven fabric sheet having a basis weight of 50 g/m$^2$ and a thickness of 170 μm produced by the same method as Example 4 with fuming sulfuric acid and concentrated sulfuric acid by the well-known method.

Prior Art 2

Separators "m" and "n" were prepared respectively by graft polymerizing a non-woven fabric sheet having a basis weight of 30 g/m$^2$ and a thickness of 100 μm produced by the same method of Example 1 and a non-woven fabric sheet having a basis weight of 50 g/m$^2$ and a thickness of 170 μm produced by the same method of Example 4 with acrylic acid by the well-known method.

Next, each of the 14 kinds of separators, a, b, c, d, e, f, g, h, i, j, k, l, m and n of the above-mentioned Examples 1, 2, 3, 4, 5, 6, and 7, Comparative Example 1, 2, and 3, and prior arts 1 and 2 were determined for alkali resistance, oxidation resistance, electrolyte retention, ion-exchange capacity, and strength by the following testing method. Results are shown in Table 1.

Table 1

| | Ratio of strength (%) | Alkali resistance (%) | Oxidation resistance (%) | Electrolyte retention (%) | Ion-exchange capacity (meq/m$^2$) |
|---|---|---|---|---|---|
| Example a | 130 | —0.15 | —0.25 | 45 | 7.2 |
| Example b | 150 | —0.22 | —0.27 | 33 | 5.2 |
| Example c | 130 | —0.13 | —0.21 | 43 | 6.9 |
| Example d | 150 | —0.12 | —0.21 | 38 | 11.2 |
| Example e | 130 | —0.22 | —0.35 | 32 | 20.5 |
| Example f | 150 | —0.21 | —0.25 | 40 | 8.9 |
| Example g | 150 | —0.11 | —0.23 | 35 | 10.7 |
| Comparative Example h | 105 | —1.5 | —5.84 | 38 | 6.8 |
| Comparative Example i | 210 | —0.10 | —0.20 | 19 | 0.9 |
| Comparative Example j | 110 | —0.21 | —0.26 | 82 | 22.3 |
| Prior art k | 80 | —0.35 | —0.94 | 24 | 0.24 |
| Prior art l | 85 | —0.31 | —0.95 | 15 | 0.8 |
| Prior art m | 90 | —0.21 | —1.05 | 22 | 0.18 |
| Prior art n | 95 | —0.44 | —1.75 | 17 | 0.25 |

In the Examples, Comparative Examples and prior art, the physical property values were determined as follows.

Strength test: The sample piece of a non-woven fabric sheet (width: 2 cm) was gripped at the both sides with an interval between chucks of 10 cm and pulled. The strength was measured when the pulled sample piece was fractured. The ratio of strength was calculated by the following equation:

$$\text{Ratio of strength (\%)} = \text{strength of sample piece after treatment} \, / \, \text{strength of sample piece before treatment} \times 100$$

Alkaline resistance: The sample piece was made to be in the state of moisture equilibrium and the weight (W) was measured in that state. Thereafter, the sample piece was soaked in potassium hydroxide solution having a specific gravity of 1.30 for one hour at 100 °C. Thereafter, the sample piece was washed with water and dried to make it in the state of moisture equilibrium and the weight ($W_1$) in that state was measured. The alkali resistance was calculated by the following equation:

$$\text{Alkali resistance (\%)} = (W - W_1)/W \times 100$$

Oxidation resistance: The sample piece was made to be in the state of moisture equilibrium and the weight (W) was measured in that state. Thereafter, the sample piece was soaked in a solution in which 250 cc of 1 wt.% potassium permanganate solution was mixed with 500 cc of 30 % potassium hydroxide solution for one hour at 50 °C. Thereafter, the sample piece was washed with water and dried to make it in the state of moisture equilibrium and the weight ($W_1$) in that state was measured. Then, the oxidation resistance was calculated by the following equation:

$$\text{Oxidation resistance (\%)} = (W-W_1)/W \times 100 \ (\%)$$

Electrolyte retention: The sample piece (5 cm $\times$ 5 cm) was made to be in the state of moisture equilibrium and the weight (W) was measured in that state. Thereafter, air in the sample piece was replaced by 0.025 g/cm$^2$ potassium hydroxide having a specific gravity of 1.30 and the potassium hydroxide solution was retained. Thereafter, the sample piece was sandwiched by two filter papers (diameter: 20 cm) from the upper side and the lower side. The sample piece was pressed with 5 kg from the upper side for 10 minutes and then the weight ($W_1$) of the sample piece was measured. Then, the electrolyte retention was calculated by the following equation:

$$\text{Electrolyte retention (\%)} = (W-W_1)/W \times 100$$

Ion-exchange capacity: The sample piece was made to be in the state of moisture equilibrium and the weight (W) was measured in that state. Thereafter, the sample piece was soaked in 200 cc of 5N hydrochloric acid for 3 hours, then taken out, sufficiently washed with distilled water and dried for one hour at 100 °C. Thereafter, the sample piece was soaked in 50 cc of 0.05N potassium hydroxide for 5 hours at 60 °C, 10cc of the supernatant was exactly taken, and bromocresol green test solution was added therein to titrate with 0.05 N hydrochloric acid (titer: $f_{cl}$). The ion-exchange capacity was calculated by the following equation, wherein X (cc) denotes the consumption of 0.05 N hydrochloric acid:

$$\text{Ion exchanging capacity (meq/m}^2) = (10 f_k - f_{cl} \times X)/4W.$$

Next, sub-C size closed nickel hydrogen batteries having electric capacity of 2.1 to 2.5 A (charge and discharge at 0.1 hour rate) were produced by using the above-mentioned 14 kinds of separators a, b, c, d, e, f, g, h, i, j, k, l, m and n, paste type Ni pole for the positive pole, paste type MH pole for the negative pole and alkaline electrolyte. The produced batteries were defined as batteries A, B, C, D, E, F, G, H, I, J, K, L, M and N. The coefficient of utilization at high rate discharge of the batteries, capacity retention after self discharge and the lifetime of the cycle of charge and discharge were determined to evaluate the performance of each separator. The results were shown in Table 2.

Table 2

|  | Coefficient of utilization at high rate discharge (%) (2.0c/0.1c) | Capacity retention after self-discharge (%) (45°C $\times$ 2 weeks) | Maintenance factor of capacity after 500 cycles (%) |
|---|---|---|---|
| Example A | 91.5 | 52.3 | 100 |
| Example B | 90.3 | 52.5 | 100 |
| Example C | 91.2 | 51.5 | 100 |
| Example D | 91.0 | 52.7 | 100 |
| Example E | 82.7 | 48.1 | 100 |
| Example F | 90.0 | 50.8 | 100 |
| Example G | 90.8 | 51.8 | 100 |
| Comparative Example H | 89.0 | 32.5 | 80 |
| Comparative Example I | 89.5 | 40.2 | 80 |
| Comparative Example J | — | — | — |
| Prior art K | 87.0 | 39.0 | 82 |
| Prior art L | 86.3 | 39.5 | 82 |
| Prior art M | 86.5 | 30.4 | 75 |

Table 2 (continued)

| | Coefficient of utilization at high rate discharge (%) (2.0c/0.1c) | Capacity retention after self-discharge (%) (45°C × 2 weeks) | Maintenance factor of capacity after 500 cycles (%) |
|---|---|---|---|
| Prior art N | 87.8 | 32.8 | 82 |

In the Examples, Comparative Examples and prior art, the physical property values were determined as follows.

Initial activation conditions: The cycle including charging at 0.1 C rate (290 mA) for 12 hours, a pause for 0.5 hours, and charging at 0.1C rate (final voltage: 1.0 V) was carried out 10 times at 30°C.

High rate discharge test: The discharge capacity was determined after the cycle including charging at 0.2C rate (290 mA) for 6 hours, a pause for 0.5 hours, and discharging at 0.1C rate (final voltage of 0.8 V) at 30 °C. Then, the discharge capacity was determined after the cycle including charging under the same conditions as the above and further discharging at 2.0C rate (final voltage of 0.8 V). The ratio of the former discharge capacity to the latter discharge capacity was calculated. The calculated value was defined as the coefficient of utilization at high rate discharge (%).

Self-discharge test: The discharge capacity was determined after the cycle including charging at 0.1C rate for 12 hours, a pause for 0.5 hours, and discharging at 0.1C rate (final voltage of 1.0 V) at 30 °C. Then, the remaining capacity (discharging at 0.1 C rate, the final voltage of 1.0 V) was determined when charged under the same conditions as the above, and then left at 45 °C for 2 weeks. The ratio of the former discharge capacity to the remaining capacity was defined as the retention of capacity (%) after self-discharge.

Cycle lifetime: The maintaining rate of capacity was determined after 500 cycles, each of which includes charging at 0.2C rate for 5 hours, a pause for 0.5 hours, discharging at 0.2 C rate (final voltage of 1.0 V) at 30 °C.

Moreover, in Comparative Example J, the ion-exchange fine powder fell out and the separator was not able to be incorporated into the battery.

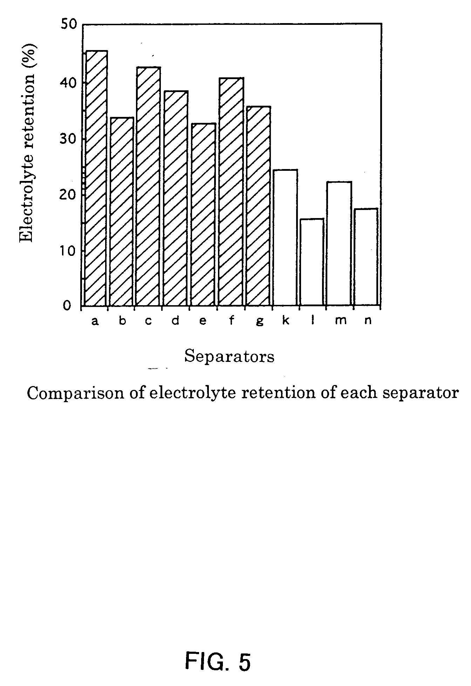

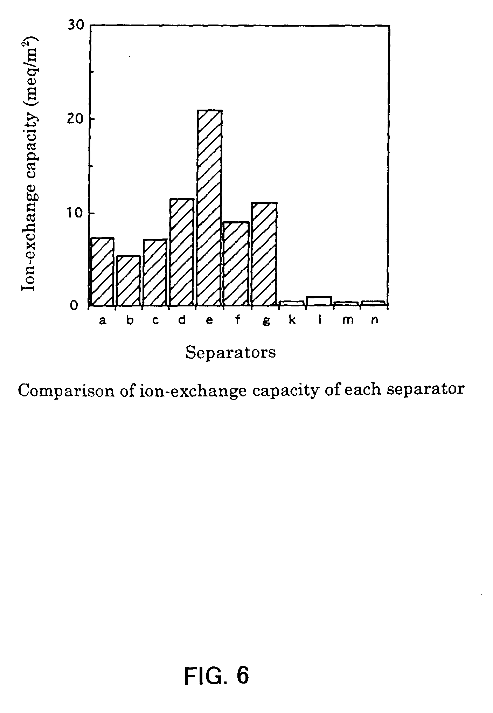

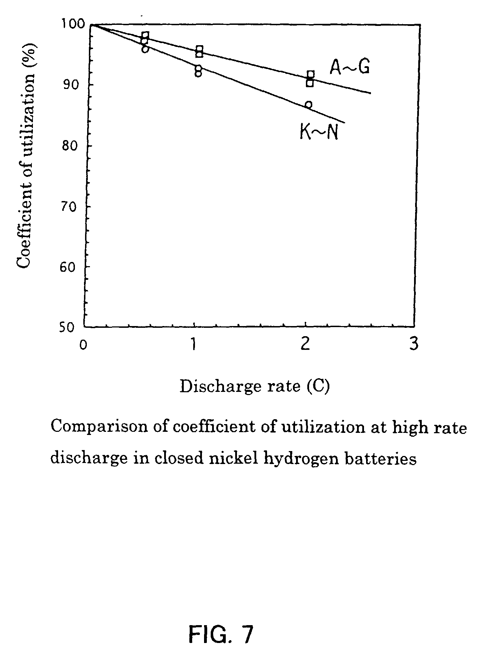

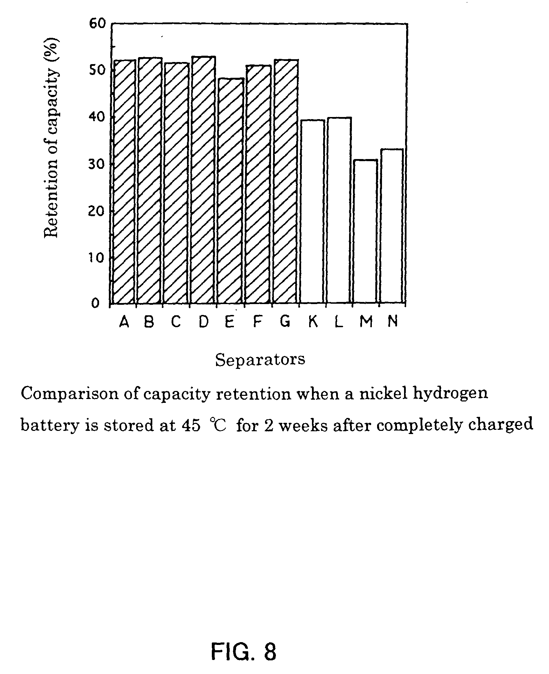

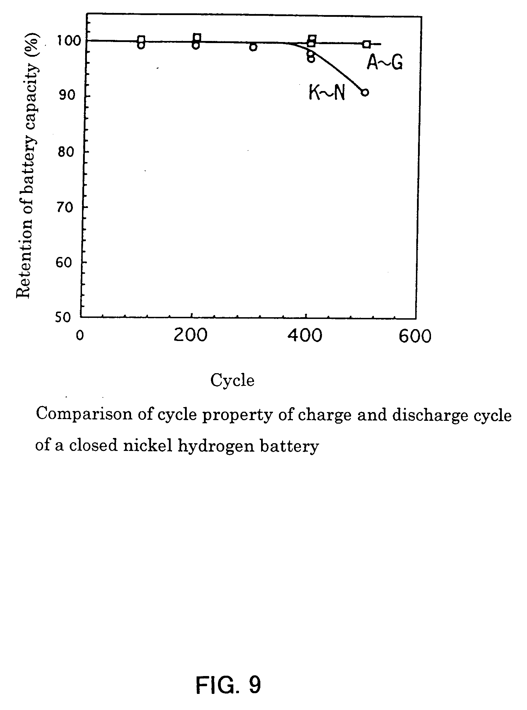

FIG. 5 is a graph showing the comparison of the electrolyte retention when voltage is applied in Table 1. Furthermore, FIG. 6 is a graph showing the comparison of the ion-exchange capacity of Table 1. FIG. 7 is a graph showing the coefficient of utilization at high rate discharge in Table 2. Furthermore, FIG. 8 is a graph showing a comparison of the capacity retention after self discharge in Table 2. Furthermore, FIG. 9 is a graph showing the comparison of the change of the battery capacity by cycles in Table 2.

As is apparent from the above Tables 1 to 2, and FIGs. 5 to 9, it was confirmed that the separators "a" to "g" and the closed nickel hydrogen batteries A to G had more improved electrolyte retention, ion-exchange capacity and strength as compared with separators "k" to "n" and the closed nickel hydrogen batteries K to N of the prior art. Furthermore, according to the performance test of batteries, it was confirmed that the retention of capacity after self discharge test and maintenance rate of the capacity after 500 cycles were radically improved.

In the above-mentioned Examples, as the olefin-based fiber, the dividable type fiber comprising polyethylene and polypropylene was used and sheeted by a sheet forming method, or the sheath and core type fiber was used and sheeted by a common carding method. However, organic fibers other than the above-mentioned fibers can be used for forming sheet.

Industrial Applicability

As mentioned above, according to the present invention, the ion-exchange fine powder is firmly adhered at least to a part of the surface of the olefin-based fiber and fiber entangled part with the binder resin that infiltrates and seals a large number of fine voids or slits formed on the surface of the olefin-based fiber by an anchor effect. Therefore, the present invention can provide the separator for batteries having high electrolyte retention, ion-exchange capacity and strength; having good alkali resistance and oxidation resistance; capable of inhibiting the self- discharge; and capable of realizing a long battery lifetime.

Furthermore, the binder resin is adhered to the surface of the olefin-based fiber by the anchor effect, thereby reinforcing the adhesive power between fibers. Therefore, even if a fiber of fine denier is used, fiber strength is not deteriorated, no cut-off occurs at the time of incorporating the separator into batteries, fibers are not deteriorated due to the repetition of charge and discharge, and micro short-circuit does not occur. Consequently, the separator for batteries can be made thinner. Therefore, high capacity of batteries can be realized.

Furthermore, the step of washing unreacted materials like the conventional acrylic acid graft polymerization or sulfonation treatment is not required. Consequently, production at low cost can be realized. Furthermore, since ultraviolet rays, electron beams, or strong acid are not used, olefin-based fiber that is a material constituting the separator is not deteriorated, and micro short-circuit does not occur.

Furthermore, by changing the mixing weight ratio of the binder resin to the ion-exchange fine powder or the attached amount, the electrolyte retention or ion-exchange performance, or the like, can be adjusted easily.

An alkaline secondary battery using the separator is excellent in discharge property. Also, it exhibits high maintenance of capacity even after the repetition of charge and discharge.

**Claims**

1. A separator for alkaline secondary batteries comprising a porous sheet comprising organic fiber, a binder resin, and ion-exchange fine powder, wherein said ion-exchange fine powder is adhered to at least a part of the surface of the organic fiber and a fiber entangled part with said binder resin that is soluble in an organic solvent and infiltrates and seals fine voids or slits provided on the surface of the organic fiber of said porous sheet.

2. The separator for batteries according to claim 1, wherein a mixing weight ratio of the binder resin to the ion-exchange fine powder is in the range from 1 : 0.3 to 1 : 10.

3. The separator for batteries according to claim 2, wherein a mixing weight ratio of the binder resin to the ion-exchange fine powder is in the range from 1 : 0.5 to 1 : 6.

4. The separator for batteries according to claim 1, wherein the ion-exchange fine powder has functions of adsorbing and catching harmful ions in the electrolyte and of retaining an alkaline electrolyte.

5. The separator for batteries according to claim 1, wherein the binder resin is at least one resin selected from the group consisting of styrene-based thermoplastic copolymer having alkali resistance and oxidation resistance, an olefin-based polypropylene resin or polyethylene resin, and a halogenated polyolefin-based polytetrafluoroethylene resin.

6. The separator for batteries according to claim 1, wherein a part of or all of the binder resin is styrene based styrene—ethylene—butylene— styrene (SEBS) thermoplastic polymer.

7. The separator for batteries according to claim 5, wherein a part of or all of the binder resin is styrene-based styrene—ethylene—butylene— styrene (SEBS) thermoplastic polymer.

8. The separator for batteries according to claim 1, wherein the ion-exchange fine powder comprises at least one resin selected from the group consisting of styrene-based cation-exchange resin or acrylic cation-exchange resin, styrene-based anion-exchange resin, acrylic anion-exchange resin or phenolic anion-exchange resin, and styrene-based chelate resin or pyridine-based chelate resin.

9. The separator for batteries according to claim 8, wherein an ion exchange group of the ion-exchange fine powder is at least one group selected from the group consisting of sulfonic acid group, sulfonate group, carboxylic acid group, and carboxylate group.

10. The separator for batteries according to claim 1, wherein the ion-exchange fine powder comprises at least one selected from the group consisting of metallic oxide having alkali resistance and exhibiting the ion-exchange property in the alkaline electrolyte, hydroxide and inorganic salts thereof.

11. The separator for batteries according to claim 4, wherein the ion-exchange fine powder comprises at least one selected from the group consisting of metallic oxide having alkali resistance and exhibiting the ion-exchange property in the alkaline electrolyte, hydroxide and inorganic salts thereof.

12. The separator for batteries according to claim 11, wherein the ion-exchange fine powder comprises at least one selected from the group consisting of titanium oxide, aluminum oxide, antimony oxide, potassium titanate and zirconium oxide.

13. The separator for batteries according to claim 1, wherein the shape of the ion-exchange fine powder is granular provided with fine voids on the surface, flake, whisker, or scale.

14. The separator for batteries according to claim 5, wherein the shape of the ion-exchange fine powder is granular provided with fine voids on the surface, flake, whisker, or scale.

**15.** The separator for batteries according to claim 1, wherein the average particle size of the ion-exchange fine powder is 100 μm pass.

**16.** The separator for batteries according to claim 5, wherein the average particle size of the ion-exchange fine powder is 100 μm pass.

**17.** The separator for batteries according to claim 15 or 16, wherein the average particle size of the ion-exchange fine powder is 50 μm pass.

**18.** The separator for batteries according to claim 1, wherein the organic fiber is a polymer type fiber having alkali resistance and oxidation resistance.

**19.** The separator for batteries according to claim 1, wherein a part of or all of the organic fiber is an olefin-based fiber.

**20.** The separator for batteries according to claim 18, wherein a part of or all of the organic fiber is an olefin-based fiber.

**21.** The separator for batteries according to claim 1, which is a separator for alkaline secondary batteries.

**22.** An alkaline secondary battery using the separator according to claim 1.

FIG. 1

FIG. 2

Mixing weight ratio (1:x)

binder resin : an ion-exchange fine powder (x)

FIG. 3

Mixing weight ratio (1:x)

binder resin : ion-exchange fine powder (x)

FIG. 4

Comparison of electrolyte retention of each separator

FIG. 5

Comparison of ion-exchange capacity of each separator

FIG. 6

Comparison of coefficient of utilization at high rate discharge in closed nickel hydrogen batteries

FIG. 7

Comparison of capacity retention when a nickel hydrogen
battery is stored at 45 ℃ for 2 weeks after completely charged

FIG. 8

Comparison of cycle property of charge and discharge cycle
of a closed nickel hydrogen battery

## FIG. 9

## INTERNATIONAL SEARCH REPORT

| | International application No. |
|---|---|
| | PCT/JP97/01593 |

**A. CLASSIFICATION OF SUBJECT MATTER**

Int. Cl$^6$ H01M2/16, H01M10/24

According to International Patent Classification (IPC) or to both national classification and IPC

**B. FIELDS SEARCHED**

Minimum documentation searched (classification system followed by classification symbols)

Int. Cl$^6$ H01M2/16, H01M10/24

Documentation searched other than minimum documentation to the extent that such documents are included in the fields searched

| | | |
|---|---|---|
| Jitsuyo Shinan Koho | 1926 – 1996 | Jitsuyo Shinan Toroku |
| Kokai Jitsuyo Shinan Koho | 1971 – 1997 | Koho 1996 – 1997 |
| Toroku Jitsuyo Shinan Koho | 1994 – 1997 | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 51-18822, A (Toshiba Ray-O-Vac K.K.), February 14, 1975 (14. 02. 75), Page 1, lower left column, lines 4 to 8; page 2, upper right column, lines 5 to 13 (Family: none) | 1 – 22 |
| A | JP, 57-46465, A (The Furukawa Electric Co., Ltd.), March 16, 1982 (16. 03. 82), Page 1, upper left column, lines 5 to 7; page 2, lower left column, line 17 to lower right column, line 12 (Family: none) | 1 – 22 |
| A | JP, 58-16464, A (Yuasa Battery Co., Ltd.), January 31, 1983 (31. 01. 83), Page 1, lower left column, lines 5 to 16; page 3, upper left column, line 16 to 19 (Family: none) | 1 – 22 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| August 7, 1997 (07. 08. 97) | August 19, 1997 (19. 08. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)